(19)

**Europäisches Patentamt**

**European Patent Office**

**Office européen des brevets**

(11)　　**EP 1 021 007 A2**

(12)　　　　**DEMANDE DE BREVET EUROPEEN**

(43) Date de publication:
　　　**19.07.2000　Bulletin 2000/29**

(51) Int. Cl.⁷: **H04J 3/06**

(21) Numéro de dépôt: **00108076.1**

(22) Date de dépôt: **07.09.1994**

(84) Etats contractants désignés:
　　　**AT BE CH DE DK ES FR GB IT LI NL SE**

(30) Priorité:　**08.09.1993 FR 9310679**
　　　　　　　　**01.07.1994 FR 9408154**

(62) Numéro(s) de document de la (des) demande(s)
　　　initiale(s) en application de l'article 76 CBE:
　　　**94401988.4 / 0 642 242**

(71) Demandeur: **ALCATEL**
　　　**75008 Paris (FR)**

(72) Inventeurs:
　　　• **Cruchant, Laurent**
　　　　**75007 Paris (FR)**

• **Dupuy, Pierre**
　**75017 Paris (FR)**

(74) Mandataire:
　　　**El Manouni, Josiane et al**
　　　**COMPAGNIE FINANCIERE ALCATEL**
　　　**Dépt. Propr. Industrielle,**
　　　**30, avenue Kléber**
　　　**75116 Paris (FR)**

Remarques:
Cette demande a été déposée le 25 - 04 - 2000
comme demande divisionnaire de la demande
mentionnée sous le code INID 62.

(54)　　**Trame de transmission de données à ambiquité réduite, émetteur et récepteur adaptés à une telle trame**

(57)　　Trame de transmission comprenant une ligne de verrouillage (00...0), des bits de synchronisation (1) et des bits d'information (B1 à B62), un bit de synchronisation étant placé immédiatement après la ligne de verrouillage, caractérisée en ce qu'elle se termine par un bit de synchronisation.

　　　Emetteur et récepteur reliés par un canal de transmission véhiculant de telles trames.

**FIG. 3**

| 0 | 0 | 0 | 0 | 0 | 0 | 0 | 0 |
|---|---|---|---|---|---|---|---|
| 1 | B1 | B2 | B3 | B4 | B5 | B6 | B7 |
| 1 | B8 | B9 | B10 | B11 | B12 | B13 | B14 |
| 1 | B15 | B16 | B17 | B18 | B19 | B20 | B21 |
| 1 | B22 | B23 | B24 | B25 | B26 | B27 | B28 |
| 1 | B29 | B30 | B31 | B32 | B33 | B34 | B35 |
| 1 | B36 | B37 | B38 | B39 | B40 | B41 | B42 |
| 1 | B43 | B44 | B45 | B46 | B47 | B48 | B49 |
| 1 | B50 | B51 | B52 | B53 | B54 | B55 | B56 |
| 1 | B57 | B58 | B59 | B60 | B61 | B62 | 1 |

EP 1 021 007 A2

**Description**

Dans un système de communication synchrone entre équipements de traitement de données, une des méthodes les plus couramment utilisées pour envoyer des messages consiste à définir une structure de trame caractérisée par

- un drapeau de synchronisation,
- un codage particulier des informations utiles à transmettre, tel que le drapeau de synchronisation ne puisse jamais être reconnu au milieu du train de données transmises.

Une des façons les plus connues pour mettre en oeuvre ce procédé consiste à choisir un drapeau qui est une suite constante de P zéros suivis d'un '1'. Le codage de l'information consiste alors simplement à insérer un '1' chaque fois qu'une suite de (P-1) 'O' a été transmise. Par exemple, si le drapeau est 'OOOO1' le message 'OO1O OOOO 1O' sera transmis sous la forme : '<u>OOOO1</u> OO1OO OO1OO 1O'. Les 6 chiffres soulignés correspondent au drapeau de synchronisation, et au '1' inséré (les espaces n'ont pas d'autre rôle que de faciliter la lecture).

Cette méthode souffre toutefois d'un défaut : le temps de transmission d'un message dépend de son contenu, ce qui est très gênant lorsqu'on souhaite assurer un délai fixe d'acheminement.

La solution connue à ce problème consiste à insérer un '1' tous les (P-1) bits d'information transmis : on est ainsi sûr qu'on ne rencontrera jamais P zéros successifs et le temps de transmission est toujours le même quel que soit l'information à transmettre. Un exemple bien connu de ce procédé est celui des trames V11O définies par le CCITT (Comité Consultatif International du Téléphone et du Télégraphe). Elles sont constituées d'un drapeau de huit zéros suivi d'un '1', un '1' étant ensuite inséré tous les 7 bits pour former une trame de 80 bits, 17 bits étant utilisés pour la synchronisation et 63 pour les informations.

On peut ainsi représenter une trame par un tableau à P colonnes et L lignes. La première ligne que l'on conviendra d'appeler ligne de verrouillage comporte P zéros et les lignes suivantes que l'on nomme lignes de données comprennent chacune un bit de synchronisation qui vaut '1' suivi de (P-1) bits d'informations.

Lorsqu'on réalise de la transmission de données au moyen de telles trames, il est courant que le canal de transmission utilisé présente un débit supérieur à celui qui est nécessaire pour acheminer les trames produites par un équipement.

Afin d'économiser les canaux de transmission, on procède naturellement à une opération de multiplexage selon laquelle ces canaux sont subdivisés en sous-canaux de sorte que le débit d'un sous-canal permette l'acheminement des données d'un équipement.

Ainsi, la demande de brevet EP 222 544 propose une trame de format fixe décomposée en une pluralité de sous-canaux de même débit, un sous-canal particulier étant utilisé pour la synchronisation. Cette solution est limitée à la transmission de sous-canaux de débit déterminé. Or il peut être nécessaire d'utiliser la même trame pour transmettre des débits différents. En simplifiant la méthode présentée dans ce document, on peut définir une trame par la succession d'un canal de synchronisation et de deux sous-canaux que l'on nomme sous-canaux demi-débit. De plus, on admet que la réunion des deux sous-canaux demi-débit constitue un canal plein débit.

On peut ainsi prévoir d'utiliser cette trame soit pour la transmission de données en provenance d'un équipement nécessitant un canal plein débit, soit pour la transmission de données de deux équipements distincts nécessitant chacun un sous-canal demi-débit.

Cependant, à la réception d'une telle trame, il est impossible de savoir si l'on est dans l'un ou l'autre de ces deux cas.

De plus cette solution est inapplicable si les deux sous-canaux demi-débit n'ont pas la même synchronisation car un sous-canal de synchronisation unique est prévu.

On connaît par ailleurs le brevet US 5 113 391. Ce document décrit une trame capable d'acheminer des canaux de différents débits et des moyens pour déterminer la nature de ces canaux. Mais là aussi il s'agit d'un système synchronisé et tous ces canaux sont référencés à la même base de temps.

Ainsi, un problème réel se pose lorsqu'il s'agit de transmettre des canaux dont la synchronisation temporelle n'est pas connue.

Il semble naturel d'utiliser une trame du type V11O pour un canal plein débit et d'utiliser une trame réduite d'un type similaire pour chacun des sous-canaux demi-débit, la transmission de deux sous-canaux se faisant par le multiplexage de deux trames réduites.

Selon une solution classiquement utilisée, ce multiplexage sera réalisé de sorte que les bits du canal correspondent à la suite alternée des bits de chacun des deux sous-canaux. Ainsi, les bits de rang impair du canal proviennent d'un premier sous-canal et les bits de rang pair de ce canal proviennent d'un second sous-canal.

Cette utilisation d'un canal pour transporter deux sous-canaux est pratiquement réalisable, cependant elle interdit également l'utilisation indifférenciée de deux sous-canaux à demi-débit ou d'un canal à plein débit. La raison en est que la réception simultanée de deux souscanaux peut être interprétée comma la réception d'un seul canal à plein débit.

Cette ambiguïté vient du fait que lorsque les deux sous-canaux transmettent simultanément un nombre de 'O' au moins égal à P/2 (où P est la longueur de la ligne de verrouillage pour un canal à plein débit), le train de bits résultant du multiplexage des deux sous-canaux comportera au moins P 'O' successifs et pourra donc être faussement interprété comme une ligne de verrouillage d'un canal à plein débit.

Deux cas de figures peuvent se rencontrer.

Dans un premier cas de figure, la ligne de verrouillage utilisée pour les sous-canaux comprend P' 'O', P' étant tel que 2(P'-1) soit supérieur ou égal à P. Il y aura ambiguïté chaque fois que deux lignes de données qui comprennent une suite de (P'-1) 'O' seront émises avec un décalage inférieur à (P'-INT(P/2+1)+1), INT(x) désignant la partie entière de x. En effet, à l'issue du multiplexage de ces deux lignes de données, il y aura au moins P 'O' successifs.

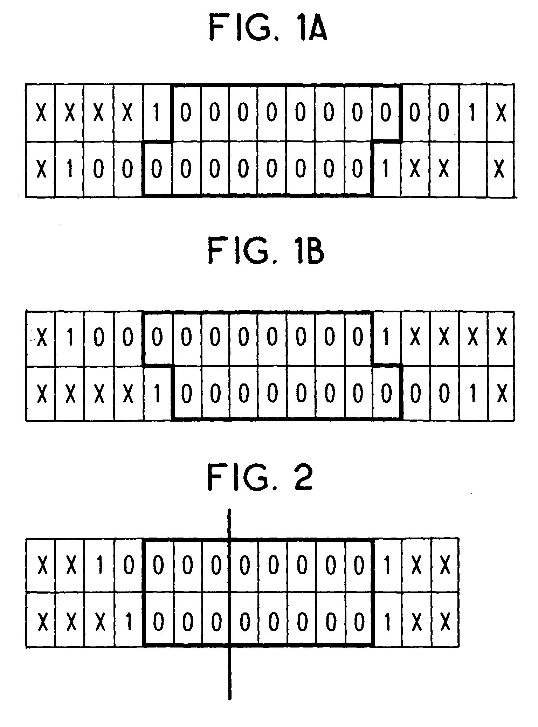

Par exemple, avec P=16 et P'=11, on trouvera au moins 16 'O' successifs dans toutes les configurations pour lesquelles le décalage est inférieur ou égal au décalage maximal. On a représenté les deux configurations correspondant à ce décalage maximum, la configuration initiale et la configuration finale dans les figures 1A et 1B où :

- la première ligne représente un premier sous-canal à demi-débit,
- la seconde ligne représente un second sous-canal à demi débit,
- le motif entouré représente la ligne de verrouillage à plein débit telle qu'elle sera vue en analysant les deux sous-canaux demi-débit comme un seul canal à plein débit.

Dans un deuxième cas de figure, il peut y avoir ambiguïté en dehors du cas précédent. Si la ligne de verrouillage des sous-canaux comprend P' 'O' étant tel que 2.(2.P'-1) soit supérieur ou égal à P, la fin d'une trame pourra comporter (P'-1) 'O' successifs. La trame suivante commençant par une ligne de verrouillage comportera P' 'O', et il y aura (2.P'-1) 'O' successifs qui seront faussement interprétés comme la ligne de verrouillage d'une trame à plein débit si le même phénomène se produit au même moment sur les deux sous-canaux à demi-débit.

On a représenté un exemple de configuration de ce type avec P=16 et P'=5 dans la figure 2 en adoptant les mêmes conventions que pour la figure 1 et en matérialisant de plus la séparation de deux trames consécutives par un trait vertical.

On voit donc que le choix du nombre P' de '0' de la ligne de verrouillage des trames émises sur les sous-canaux à demi-débit influe grandement sur les risques de confusion avec une ligne de verrouillage de la trame émise sur les canaux à plein débit. L'ambiguïté peut être évitée en réduisant suffisamment le nombre P'.

Cependant, la réduction de la longueur de la ligne de verrouillage se fait au détriment de l'efficacité de transmission.

En effet, on définit communément le débit brut comme le nombre de bits de la trame transmis par unité de temps et il est donc proportionnel à P'.L', si L' représente le nombre de lignes de la trame utilisée pour le demi-débit. On définit également de débit utile comme de nombre de bits d'information de la trame transmis pendant la même unité de temps et il est donc proportionnel à (P'-1).(L'-1). Si l'on caractérise l'efficacité de la transmission, celle-ci vaut le rapport du débit utile au débit brut, soit :

$$(P'-1).(L'-1)/P'.L'.$$

D'une part, l'efficacité sera d'autant meilleure que les valeurs P' et L' seront proches. Ainsi, si l'on choisit une valeur faible pour P', il conviendrait d'en faire de même pour L'. Mais d'autre part, l'efficacité de transmission sera d'autant meilleure que la trame sera longue, c'est-à-dire que le produit du nombre de colonnes par le nombre de lignes P'.L' sera important. Il n'est donc pas souhaitable de réduire par trop la longueur de la ligne de verrouillage.

On pourrait imaginer de coder un champ particulier de la trame demi-débit de sorte qu'il soit impossible de retrouver la valeur de ce champ, après multiplexage, dans un canal plein débit.

Cependant, si dans la pratique il peut être relativement aisé de résoudre ce problème quand il y a très peu de configurations ambiguës (par exemple une seule), le problème devient presque insoluble lorsque le nombre de cas ambigus augmente. Il peut même être plus intéressant de réduire la valeur de P' à cause du nombre de bits additionnels à prévoir dans les trames à demi-débit pour lever l'ambiguïté.

Le but de la présente invention est donc de réduire, voire de supprimer, le nombre de configurations ambiguës de trames de transmission quelle que soit la longueur de la ligne de verrouillage.

Selon l'invention, une trame de transmission comprend une ligne de verrouillage, des bits de synchronisation et des bits d'information, un bit de synchronisation étant placé immédiatement après la ligne de verrouillage, et, de plus, cette trame se termine par un bit de synchronisation.

L'invention concerne aussi un récepteur prévu pour recevoir des trames de données qui correspondent soit à un canal plein débit soit à au moins un sous-canal à débit réduit chacun affecté d'un motif de synchronisation propre, cet émetteur comprenant des moyens de synchronisation sur l'une quelconque des trames reçues.

L'invention concerne également un émetteur prévu pour transmettre des trames chacune composée d'une ligne de verrouillage, de bits de synchronisation et de bits d'information, cet émetteur comprenant des moyens pour encadrer la ligne de verrouillage par deux bits de synchronisation.

De plus, si les trames se terminent par des bits d'alignement ayant même valeur que les bits de synchronisation, l'émetteur comprend des moyens pour supprimer le dernier bit d'alignement sur commande seulement si le bit d'information qui le précède a la valeur d'un bit de synchronisation.

L'invention apparaîtra maintenant de manière plus précise dans le cadre de la description d'exemples de réalisation donnés à titre indicatif en se référant aux figures annexées qui représentent :

- les figure 1A et 1B, deux configurations ambiguës se présentant dans un premier cas de figure,
- la figure 2, une configuration ambiguë se présentant dans un second cas de figure,
- la figure 3, un exemple de trame selon l'invention.

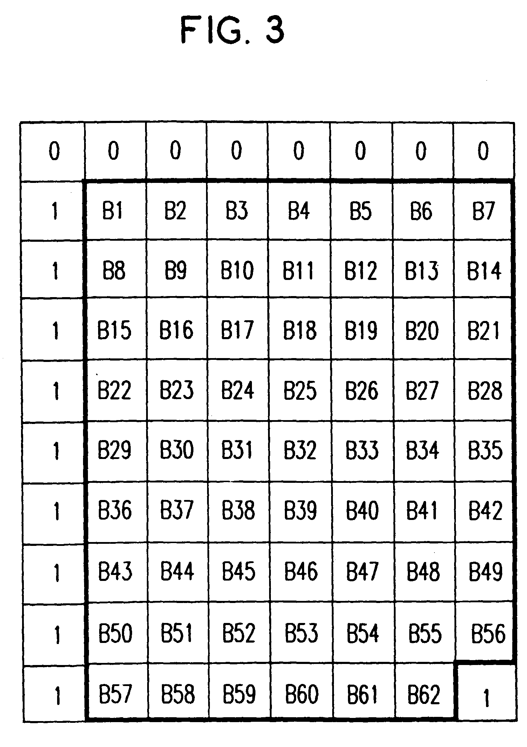

On présentera la trame objet de l'invention à partir de la trame V110 déjà citée, en référence à la figure 3.

La trame utilisée pour un sous-canal qui est représentée sous la forme d'un tableau dans cette figure comprend une ligne de verrouillage formée de huit '0' et neuf lignes de données commençant chacune par un bit de synchronisation positionné à '1'. Les bits de synchronisation ont donc une valeur complémentaire de celle des bits de la ligne de verrouillage.

Un bloc de données à transmettre se présente sous la forme d'une suite de 62 bits d'information B1 à B62.

La première ligne de données comprend les sept premiers bits d'information B1 à B7. La seconde ligne de données comprend les sept bits d'information suivants B8 à B14, et ainsi de suite jusqu'à la dernière ligne de données qui comprend les six derniers bits d'information B57 à B62 mais qui, contrairement à la trame V110, se termine par un bit de synchronisation à '1' au lieu d'un bit d'information.

Ainsi, la seule ligne comportant huit '0' qui est la ligne de verrouillage sera toujours précédée par un '1' qui est le dernier bit de la trame précédente.

On est donc assuré qu'en multiplexant deux trames de ce type on ne retrouvera jamais plus de seize '0' consécutifs, alors qu'avec une trame V110 on aurait pu trouver jusqu'à trente '0' consécutifs.

L'invention s'applique naturellement au cas général d'une trame demi-débit comprenant une ligne de verrouillage de longueur P' et (L'-1) lignes de données.

On rappelle que la trame utilisée pour un canal à plein débit comprend une ligne de verrouillage de longueur P et (L-1) lignes de données.

Ainsi, lorsque P est supérieur à 2P', il n'y a plus aucune ambiguïté, tandis que dans le cas contraire le nombre de configurations ambiguës est sensiblement réduit.

A titre d'exemple, lorsque P vaut 16, il n'y a pas d'ambiguïté dans le cas où P' est inférieur à 8 et il y a seulement une configuration ambiguë dans le cas où P' vaut 8.

Dans ce dernier cas, on peut prévoir un champ d'identification qui prend la place de bits d'informations dans la trame, ce champ précisant qu'il s'agit là d'un sous-canal. Un moyen simple consiste à remplacer un bit de synchronisation par un '0' de sorte que le récepteur détecte une erreur de synchronisation sur le canal plein débit. En effet, le récepteur doit toujours recevoir un '1' au début d'une ligne de données. Mais si ce bit de synchronisation est forcé à '0', il faut insérer des '1' de part et d'autre de ce bit à '0' pour assurer la non répétition de P' 'O' consécutifs.

On définit alors une nouvelle structure de trame par référence à celle décrite en liaison avec la figure 3 en remplaçant dans la première ligne de données le dernier bit B7 par un '1' et en remplaçant dans la deuxième ligne de données, d'une part le bit de synchronisation par un '0' et d'autre par le bit suivant B8 par un '1'.

On s'aperçoit que, s'il faut impérativement un bit de synchronisation immédiatement après la ligne de verrouillage pour éviter la répétition de plus de P' '0' consécutifs, les autres bits de synchronisation peuvent être placés n'importe où pourvu que deux bits de synchronisation consécutifs ne soient jamais séparés par plus de (P'-1) bits d'information. Il s'agit là, rappelons-le, de la seule justification des bits de synchronisation.

Une autre solution consiste donc à prévoir, conformément à ce qui a été exposé, un bit de synchronisation en dernière position de la dernière ligne de données, puis un nouveau bit de synchronisation P' bits avant, c'est-à-dire à la dernière position de l'avant-dernière ligne de données et ainsi de suite si bien que chaque ligne de données se termine par un bit de synchronisation.

Il faut de plus provoquer un défaut de synchronisation sur la trame plein débit. Pour ce faire, on peut forcer à '0' le premier bit de la seconde ligne de données.

On obtient ainsi une autre trame susceptible de convenir pour le demi-débit qui comprend :

- une ligne de verrouillage,
- une première ligne de données commençant par un '1', suivi de six bits d'information et se terminant par un '1',
- une deuxième ligne de données commençant par un '0', suivi de six bits d'information et se terminant par un '1'
- toutes les autres lignes de données comprenant sept bits d'information et se terminant par un '1'.

En résumé, l'homme du métier comprend bien qu'il faut un bit de synchronisation à la suite de la ligne de verrouillage, qu'il faut également un bit de synchronisation à la fin de la trame, mais que les autres bits de synchronisation peuvent être placés n'importe où pourvu qu'ils ne soient jamais séparés par plus de (P'-1) bits d'information.

L'invention concerne donc un émetteur qui comprend des moyens pour affecter au dernier bit d'une trame la valeur d'un bit de synchronisation. Ces moyens ne seront pas décrits car ils font partie de l'état de la technique, l'émetteur étant déjà prévu pour placer un tel bit de synchronisation à un autre endroit. On remarquera seulement que si cette opération est bien nécessaire pour une trame demi-débit, elle ne l'est pas pour une trame plein débit. Pour cette dernière trame, on pourra donc choisir librement la nature du dernier bit.

Lorsque deux émetteurs demi-débit se partagent le canal, ils peuvent fonctionner indépendamment l'un de l'autre car chaque sous-canal demi-débit comporte sa propre synchronisation.

L'invention concerne également un récepteur prévu pour recevoir des trames demi-débit ou plein débit en provenance d'un émetteur.

De manière connue, ce récepteur comprend des moyens de synchronisation pour se synchroniser sur une trame plein débit.

Ces moyens de synchronisation recherchent une séquence de P '0 suivie d'un bit de synchronisation :

- s'ils n'y parviennent pas au bout d'un temps déterminé, ils produisent un signal de défaut,
- s'ils y parviennent, ils vérifient que les bits de rang k.P + 1 dans la trame sont bien à '1' pour tout k compris entre 1 et (L-1) (il s'agit des bits de synchronisation produits par l'émetteur); si un seul de ces bits est à '0', là encore ils produisent un signal de défaut.

Lorsque la synchronisation est obtenue, les moyens de synchronisation produisent un signal de validation.

Le récepteur comprend de plus des moyens d'identification qui reçoivent le signal de défaut et le signal de validation.

Si le signal de validation est présent ils précisent que la trame reçue doit être traitée comme une trame plein débit.

Si le signal de défaut est présent ils procèdent au démultiplexage de la trame reçue sur deux voies.

On recherche alors la synchronisation sur chaque voie, comme cela a déjà été présenté, pour vérifier s'il s'agit d'une trame demi-débit. Si c'est le cas sur l'une des voies, ces moyens d'identification précisent qu'il s'agit d'un sous-canal demi-débit et qu'il doit être traité comme tel.

Le récepteur est considérablement simplifié en ce sens que si la synchronisation complète a été acquise sur une trame plein débit il n'y a plus d'ambiguïté quant à la nature de la trame reçue. Il n'est pas nécessaire d'analyser les bits reçus en dehors de la ligne de verrouillage et des bits de synchronisation.

L'homme du métier comprend bien que le mode de réalisation du récepteur présenté ci-dessus est donné à titre d'exemple et qu'il existe bien d'autres possibilités. Il est naturellement possible de rechercher la synchronisation simultanément sur un canal plein débit et sur un sous-canal demi-débit étant donné que les motifs de synchronisation correspondants sont différents (par motif de synchronisation, on entend la ligne de verrouillage et la position des bits de synchronisation).

Il convient maintenant d'examiner des trames particulières faisant usage de bits d'alignement temporel. Une telle trame est notamment décrite dans la recommandation GSM. 08.60 version 3.3.1 pages 7 à 19. Cette trame est du type V 110 mais elle se termine par quatre bits d'alignements qui prennent la place de bits de données. Ces bits d'alignement sont utilisés pour compenser un écart de synchronisation entre l'équipement qui émet la trame et celui qui la reçoit. Ils sont donc susceptibles d'être transmis ou de ne pas l'être sur commande d'un organe de contrôle en fonction de cet écart de synchronisation.

Ces bits d'alignement ne modifient en rien le traitement d'un canal plein-débit puisque les derniers bits n'interviennent pas dans la structure de la trame.

Il n'en va pas de même dans le cadre du demi-débit puisque l'invention impose que le dernier bit soit un bit de synchronisation. Une solution avantageuse consiste ici à affecter ces bits d'alignement de la même valeur que celle des bits de synchronisation.

Il n'est alors plus nécessaire de rajouter un bit de synchronisation à la fin de la trame. En effet, en présence de n bits d'alignement il sera toujours possible de supprimer la transmission de (n-1) de ces bits. Le dernier bit d'alignement ne sera supprimé que si le dernier bit de données de la trame a la valeur d'un bit de synchronisation.

Il pourra s'en suivre un léger retard dans l'alignement des synchronisations des équipements émetteur et récepteur, mais dans la plupart des cas ce retard sera sans conséquence. En effet, il n'est généralement pas nécessaire de rattraper instantanément l'écart de synchronisation.

D'autre part ce rattrapage n'a lien qu'occasionnellement, si bien qu'il est fort peu probable de trouver une série de trames consécutives dont le dernier bit de donnée a une valeur complémentaire de celle d'un bit de synchronisation en nombre suffisamment élevé pour empêcher l'alignement des synchronisations. A titre d'exemple, si le rythme des trames est de 50 par seconde, il y a une chance sur 30 millions de devoir attendre plus d'une demi-seconde avant de pouvoir supprimer le dernier bit d'alignement.

L'émetteur de l'état de l'art étant déjà conçu pour supprimer un bit d'alignement en réponse à un signal d'alignement sera modifié pour la mise en oeuvre de l'invention de manière très simple. Les (n-1) premiers bits d'alignement seront supprimés, comme habituellement, en présence du signal d'alignement. Par contre le dernier bit d'alignement sera supprimé si le signal d'alignement est présent et si le dernier bit de donnée à la valeur d'un bit de synchronisation.

L'invention trouvera application notamment dans le système de radiocommmunication GSM, particulièrement dans le cas de la transmission de la parole. Dans le cas présent, les bloc de données à transmettre prennent la forme de paquets de parole codée.

En effet, dans ce système, la parole codée à plein débit (13 kbits/s) doit faire l'objet d'un transcodage avant son traitement ultérieur, dans le réseau public commuté, par exemple. Il est donc prévu un transcodeur agissant ici comme un récepteur qui reçoit des paquets de parole codée en provenance d'une station de base agissant comme un émetteur.

Par ailleurs, le GSM prévoit également que la parole puisse faire l'objet d'un codage à demi-débit (approximativement 6,5 kbits/s).

Il vient naturellement à l'idée de multiplexer deux sous-cannaux véhiculant chacun un paquet codé à demi-débit pour les acheminer sur un canal prévu pour un paquet à plein débit, ceci dans le souci d'économiser des liens de transmission entre la station de base et le transcodeur.

Bien évidemment, l'invention s'applique pour d'autres valeurs du débit et, pour un nombre différent de sous-canaux.

**Revendications**

1. Trame de transmission de données, comprenant une ligne de verrouillage (00...0), des bits de synchronisation (1) et des bits d'information (B1 à B62), caractérisée en ce que, ladite trame correspondant à un sous-canal à débit réduit, et étant destinée à être transmise à un récepteur prévu pour recevoir des trames correspondant soit à canal plein débit soit à au moins un sous-canal à débit réduit chacun affecté d'un motif de synchronisation propre, ladite trame se termine par un bit de synchronisation.

2. Trame selon la revendication 1, caractérisée en ce que, ladite trame se terminant par des bits dits d'alignement destinés à être supprimés, sur commande, pour réaliser un alignement temporel, lesdits bits d'alignement ont même valeur que lesdits bits de synchronisation.

3. Trame selon la revendication 2, caractérisée en ce que le dernier desdits bits d'alignement est supprimé, sur commande, seulement si le bit d'information qui le précède a la valeur d'un bit de synchronisation.

4. Emetteur pour la transmission de trames de données comportant chacune une ligne de verrouillage (00...0), des bits de synchronisation (1) et des bits d'information (B1 à B62), caractérisé en ce que, ces trames correspondant à un sous-canal à débit réduit, et étant destinées à être transmises à un récepteur prévu pour recevoir des trames correspondant soit à canal plein débit soit à au moins un sous-canal à débit réduit chacun affecté d'un motif de synchronisation propre, ledit émetteur comprend des moyens pour émettre des trames se terminant par un bit de synchronisation.

5. Emetteur selon la revendication 4, caractérisé en ce qu'il comporte des moyens pour émettre des trames se terminant par des bits dits d'alignement destinés à être supprimés, sur commande, pour réaliser un alignement temporel, lesdits bits d'alignement ayant même valeur que lesdits bits de synchronisation.

6. Emetteur selon la revendication 5, caractérisé en ce qu'il comprend des moyens pour supprimer le dernier desdits bits d'alignement, sur commande, seulement si le bit d'information qui le précède a la valeur d'un bit de synchronisation.

7. Récepteur pour la réception de trames de données comportant chacune une ligne de verrouillage (00...0), des bits de synchronisation (1) et des bits d'information, caractérisé en ce que, lesdites trames correspondant soit à un canal plein débit soit à au moins un sous-canal à débit réduit chacun affecté d'un motif de synchronisation propre, et lesdites trames correspondant à un sous-canal à débit réduit se terminant par un bit de synchronisation, ledit récepteur comporte des moyens de synchronisation sur l'une quelconque des trames reçues.

8. Récepteur pour la réception de trames de données comportant chacune une ligne de verrouillage (00...0), des bits de synchronisation (1) et des bits d'information, caractérisé en ce que, lesdites trames correspondant soit à canal plein débit soit à au moins un sous-canal à débit réduit chacun affecté d'un motif de synchronisation propre, et lesdites trames correspondant à un sous-canal à débit réduit se terminant par des bits dits d'alignement ayant même valeur que lesdits bits de synchronisation, ledit récepteur comporte des moyens de synchronisation sur l'une quelconque des trames reçues.

9. Récepteur pour la réception de trames de données comportant chacune une ligne de verrouillage (00...0), des bits de synchronisation (1) et des bits d'information, caractérisé en ce que, lesdites trames correspondant soit à canal plein débit soit à au moins un sous-canal à débit réduit chacun affecté d'un motif de synchronisation propre, lesdites trames correspondant à un sous-canal à débit réduit se terminant par des bits dits d'alignement ayant même valeur que lesdits bits de synchronisation, et le dernier desdits bits d'alignement étant supprimé seulement si le bit. d'information qui le précède a la valeur d'un bit de synchronisation, ledit récepteur comporte des moyens de synchronisation sur l'une quelconque des trames reçues.

# FIG. 1A

| X | X | X | X | 1 | 0 | 0 | 0 | 0 | 0 | 0 | 0 | 0 | 0 | 0 | 1 | X |
|---|---|---|---|---|---|---|---|---|---|---|---|---|---|---|---|---|
| X | 1 | 0 | 0 | 0 | 0 | 0 | 0 | 0 | 0 | 0 | 0 | 1 | X | X | | X |

# FIG. 1B

| X | 1 | 0 | 0 | 0 | 0 | 0 | 0 | 0 | 0 | 0 | 0 | 1 | X | X | X | X |
|---|---|---|---|---|---|---|---|---|---|---|---|---|---|---|---|---|
| X | X | X | X | 1 | 0 | 0 | 0 | 0 | 0 | 0 | 0 | 0 | 0 | 0 | 1 | X |

# FIG. 2

| X | X | 1 | 0 | 0 | 0 | 0 | 0 | 0 | 0 | 0 | 1 | X | X |
|---|---|---|---|---|---|---|---|---|---|---|---|---|---|
| X | X | X | 1 | 0 | 0 | 0 | 0 | 0 | 0 | 0 | 1 | X | X |

# FIG. 3

| 0 | 0 | 0 | 0 | 0 | 0 | 0 | 0 |
|---|---|---|---|---|---|---|---|
| 1 | B1 | B2 | B3 | B4 | B5 | B6 | B7 |
| 1 | B8 | B9 | B10 | B11 | B12 | B13 | B14 |
| 1 | B15 | B16 | B17 | B18 | B19 | B20 | B21 |
| 1 | B22 | B23 | B24 | B25 | B26 | B27 | B28 |
| 1 | B29 | B30 | B31 | B32 | B33 | B34 | B35 |
| 1 | B36 | B37 | B38 | B39 | B40 | B41 | B42 |
| 1 | B43 | B44 | B45 | B46 | B47 | B48 | B49 |
| 1 | B50 | B51 | B52 | B53 | B54 | B55 | B56 |
| 1 | B57 | B58 | B59 | B60 | B61 | B62 | 1 |